# EUROPÄISCHE PATENTSCHRIFT

(11) **EP 2 239 396 B1**
(45) Veröffentlichungstag und Bekanntmachung des Hinweises auf die Patenterteilung: **27.06.2012**
(21) Anmeldenummer: 10003325.7
(22) Anmeldetag: 29.03.2010
(51) Int. Cl.: E04F 17/04, F16L 23/036, F16L 23/14, F24F 13/02

(54) **Verbindungssystem, insbesondere Flanschverbinder für Luftkanalmodule**
Connection system, in particular flange connector for air channel modules
Système de raccordement, notamment bride pour module de canal d'aération

(30) Priorität: 07.04.2009 DE 102009016391
(43) Veröffentlichungstag der Anmeldung: 13.10.2010
(73) Patentinhaber: Meyer, Heinrich, 15713 Königs Wusterhausen (DE)
(72) Erfinder: Meyer, Heinrich, 15713 Königs Wusterhausen (DE)
(74) Vertreter: Hannig, Wolf-Dieter

(56) Entgegenhaltungen:
- DE-A1- 10 324 160
- DE-A1-102005 047 726
- DE-U1-202009 012 056

## Beschreibung

Die Erfindung betrifft Verbindungssysteme, insbesondere Flanschverbinder für mit Abgasen, Dämpfen und/oder Kondensaten beaufschlagten Luftkanalmodule unterschiedlicher Querschnittsform aus dünnem Stahl-, Aluminium- oder Kupferblech oder Blech aus deren Legierungen oder aus Kunststoff geformten Abschnitten o. dgl., mit jeweils einen Flansch aufweisenden ersten und zweiten Luftkanalabschnitt, mit die Flansche zusammenhaltenden aus Schraubenbolzen und Mutter bestehenden Schraubverbindungen sowie Klemmverbindungen aus einem bolzenartige Halteteil mit Schaft und einem in einen Einsteckschlitz des Schaftes einsteckbaren keilförmigen, gegen den anderen Flansch drückenden Raststück, wobei die Schraub- und Klemmverbindungen durch in die Flansche in regelmäßigen Abständen entlang des Umfangs eingebrachten Bohrlöcher hindurchgeführt und die Flansche im dichtenden Press-Sitz zusammenhalten sind, wobei der Einsteckschlitz und das Raststück einander zugewandte Keilflächen aufweisen.

### Stand der Technik

Aus der DE 10 2005 047 726 A1 ist eine Anordnung zum Verbinden von Flansche aufweisenden, mit Abgasen, Dämpfen und Kondensaten beaufschlagten Kanalmodulen oder -abschnitten unterschiedlicher Querschnittsformen aus Blech bekannt. Die Stoßflächen der Flansche werden durch Schraub- und/oder Klemm-Mittel pressend zusammengehalten, wobei die Stoßflächen der Flansche durch eine Klebung miteinander stoffschlüssig verbunden und zur zusätzlichen Stabilisierung der Klebung mindestens zwei die Flansche an ihrem Umfang gleichmäßig voneinander verteilt angeordnete Schraubmittel und/oder Klemm-Mittel vorgesehen sind. Das Klemm-Mittel besteht aus einem, in fluchtende Löcher der Flansche einsteckbares bolzenartiges Halteteil mit Schaft und einem keilförmigen Raststück, das in einen im Schaft des Halteteils eingearbeiteten Einsteckschlitz gegen den anderen Flansch drückend eingeschoben ist.

Diese bekannte Flanschverbindung erreicht zwar eine hohe Dichtigkeit durch die nachträglich aufgebrachte Klebschicht an der Fügerille der Flansche, doch tritt infolge der in den Kanalmodulen unterschiedlich geförderten Gasmengen eine ständige dynamische Beanspruchung, beispielsweise eine Vibration der Blechwände der Module auf, die zu einer Dauerbeanspruchung der bekannten Klemmverbindung führt und letztendlich die Klemmung löst. In Folge wird die Abdichtung zerstört und es werden aufwändige Nacharbeiten notwendig. Andererseits sind Schraubverbindungen in der Montage material und -arbeitszeitintensiv.
Des Weiteren lässt sich diese bekannte Lösung nur durch Zerstörung lösen, wodurch dieselbe montageunfreundlich und kostenintensiv ist.

Die DE 103 24 160 B4 beschreibt eine Vorrichtung zum Verbinden von Flansche aufweisenden Luftkanalabschnitte aus Blech, Kunststoff o. dgl. mit einem Haltestück zum Umgreifen Aneinanderstoßender, gegen Luftaustritt abgedichteter, wulst- bzw. bördelartig geformter Flansche der Luftkanalabschnitte. Das Halsstück ist einerends mit einem eine Pressfläche aufweisenden Greifteil zum Hintergreifen des ersten Flansches versehen. Anderenends weist das Haltestück ein etwa mittig zum Greifteil angeordnetes Widerlagerteil mit einem eine hinterschnittene Rastkante besitzenden Einsteckschlitz zum Einschieben einer gegen den zweiten Flansch drückenden, keilförmigen Rastleiste auf, wobei die Rastleiste mit ihren Zähnen beim Einschieben über die Rastkante hinweg an dieser unlösbar verrastet, so dass die Flansche gegeneinander pressend flächig abdichten.
Dies ist mit dem Nachteil verbunden, dass die Verbindung nur durch Zerstörung gelöst werden kann, wodurch die Demontage, Reparatur und Wartung zeitaufwändig wird und sich die Kosten beträchtlich erhöhen.

### Aufgabenstellung

Bei diesem Stand der Technik liegt der Erfindung die Aufgabe zugrunde, ein Verbindungssystem der eingangs genannten Art derart zu verbessern, dass die Verbindung leicht ohne Zerstörung gelöst werden kann, trotz dynamischer Beanspruchung weitgehend ohne Schraubverbindung auskommt sowie dicht, montagefreundlich und billig bleibt.

Diese Aufgabe wird durch ein Verbindungssystem, insbesondere Flanschverbinder mit den Merkmalen der Ansprüche 1 oder 2 gelöst.

Vorteilhafte Ausgestaltungen des Verbindungssystems sind den Unteransprüchen entnehmbar.

Die erfindungsgemäße Lösung zeichnet sich dadurch aus, dass am Umfang der Flansche entsprechend der Form und der Geometrie der Luftkanalsabschnitte eine möglichst geringe Anzahl von metallischen Schraubverbindungen und eine maximal mögliche Anzahl von Klemmverbindungen vorgesehen sind, deren Verbindungsteile durch miteinander in Eingriff gebrachte Rastmittel lösbar verrastet sind, wobei das Verhältnis der Anzahl von Schraubverbindungen zur Anzahl der Klemmverbindungen pro laufender m Flanschverbindung mindestens 1:2 bis 1:10 beträgt.

Die Verbindungsteile der Klemmverbindung bestehen aus einem keilförmigen Raststück und einer in den Schaft des Haltebolzens eingearbeiteten Schlitzöffnung mit einer Keilfläche, deren Öffnungswinkel aufeinander abgestimmt sind.
Die Keilflächen des Raststückes und Einsteckschlitzes sind mit halbzylinderförmig ausgebildeten Rastvorsprüngen versehen, die gegeneinander alternierend am Raststück und am Einsteckschlitz ausgerichtet sind und beim Einschieben in den Einsteckschlitz aneinander lösbar verrasten, wobei die Rastvorsprünge voneinander jeweils in einer Rastebene liegenden, geradlinig angeordneten Bereichen zwischen den Rastvorsprüngen beabstandet sind, in denen die jeweils alternierenden Rastvorsprünge des Raststückes bzw. Einsteckschlitz aufgenommen sind, wobei die Bereiche Breiten aufweisen, die gegenüber dem Durchmesser der Rastvorsprünge mindestens gleich oder geringfügig größer sind.

Eine weitere Lösung der Aufgabe sieht vor, dass die Zähne der Verzahnung des Raststückes jeweils von einem in einer Rastebene liegenden, geradlinig angeordneten Bereich beabstandet sind, dem mindestens zwei Zähne der Verzahnung des Einsteckschlitzes zugeordnet sind und die beim Einschieben in den Einsteckschlitz lösbar an den Zähnen der Verzahnung verrasten, wobei der Bereich eine Breite aufweist, die gegenüber der Breite des Zahnes der Verzahnung des Einsteckschlitzes mindestens gleich oder geringfügig größer ist.

Von besonderem Vorteil ist, dass die Verbindungsteile ohne Zerstörung wieder gelöst werden können. Dies wird dadurch möglich, dass die ineinandergreifenden Rastvorsprünge bei Aufbringen entsprechender Kräfte aufeinander gleiten können, so dass die Verbindung in Einsteckrichtung Klemmkraft erzeugt oder in Ausschlagrichtung lösbar ist.

In einer bevorzugten Ausführungsform der Erfindung bestehen das Raststück und das Halteteil aus einer gemeinsamen Werkstoffqualtät wie Stahl, Aluminium Kunststoff, Kohlenstofffaser- oder Glasfaser-Composite.

Es hat sich als zweckmäßig erwiesen, wenn der Kunststoff für das Raststück und das Halteteil aus Polyamin oder Polycarbonat oder Polyacetal besteht. Ebenso können auch Kunststoff-Composite für das Raststück und Halteteil eingesetzt werden, die aus einem Gemisch aus Polycarbonat, Polyacetal und Polyamin mit 10% Glasfasern oder einem Gemisch aus Polyamin und 35 bis 50 Gew.-% Glasfasern bestehen.

In weiterer bevorzugter Ausführungsform der Erfindung können das Halteteil und das Raststück aus unterschiedlichen Werkstoffen bestehen, wobei das Halteteil ein schwingungsdämpfendes Polyamid zur Absorption von Vibrationen und das Raststück ein hochfestes Composite-Material aus Glashartgewebe-Laminat auf Epoxidharz- oder Melamin-Basis zur Übertragung hoher Presskräfte auf die Flansche umfasst.
Dies ermöglicht zusätzlich zur Verrastung der Verbindungsteile, die anliegenden Vibrationen durch das Material des Halteteils abzubauen, so dass das Raststück in seiner verrasteten Lage sicher verbleibt.

Es hat sich gezeigt, dass bei einem Öffnungswinkel der Keilflächen des Raststückes und des Einsteckschlitzes von 5 bis 12°, vorzugsweise 11° eine gleichmäßige Flächenpressung an den zu verbindenden Flanschflächen dann erreicht wird, wenn die Klemmverbindung alle 10 cm entlang des Flanschumfangs verteilt angeordnet ist.
Das Raststück weist eine Länge auf, die deutlich größer ist als die Längsabmessung bzw. der Durchmessers des Schaftes, wodurch sich die Wirkbereiche benachbarter Klemmverbindungen überlagern können.
Dies stellt sicher, dass die Verbindung entlang des gesamten Umfanges der Flansche dicht bleibt.

Gegen das ungewollte Lösen der Klemmverbindung zwischen den Rastvorsprüngen oder Verzahnungen von Raststück und Keilfläche hat sich eine Rasttiefe von etwa 0,5 mm und ein Winkel der Zahnflanken zueinander von 90° als zweckmäßig erwiesen, so dass bei anliegender Vibrationsbelastung der Rastweg deutlich über der von der Vibration erzeugten Auslenkung liegt.

Der Schaft des Halteteils hat vorzugsweise eine ovale oder elliptische oder runde Form, wodurch gewährleistet werden kann, dass die Einschlagrichtung des Raststückes entsprechend den Gegebenheiten der Montage einbaufreundlich bleibt.

Das Raststück besitzt an seinem der Einschlagrichtung abgewandten Ende einen ambossartigen Bereich zum Einschlagen in den Einsteckschlitz im Schaft des Halteteils. Dies ist mit dem Vorteil verbunden, dass die mit dem Einschlagen aufgebrachten Kräfte nicht zu einer Deformation des Raststücks führen.

Die erfindungsgemäße Lösung ermöglicht es, die Anzahl der metallischen Schraubverbindungen an Flanschen von Luftkanalabschnitten großer Dimension, beispielsweise von bis zu 5 m Länge und 2m Höhe, drastisch zu reduzieren und trotzdem eine dichte, korrosionsfeste, montagefreundliche und zugleich preiswerte Flanschverbindung bereitzustellen.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

### Es zeigen die

Fig. 1 eine perspektivische Ansicht von zwei durch Schraub- und Klemmverbindungen zusammengefügten großformatigen Luftkanalabschnitten nach dem Stand der Technik gemäß DE 10 2005 047 726 A1,

Fig. 2 eine perspektivische Darstellung der Klemmverbindung von zusammengefügten Flanschen zweier Luftkanalabschnitte nach dem Stand der Technik gemäß DE 10 2005 047 726 A1,

Fig. 3 eine Explosionsdarstellung der erfindungsgemäßen Klemmverbindung,

Fig. 4 eine perspektivische Darstellung des Halteteils mit Einsteckschlitz und Keilfläche Rastvorsprünge,

Fig. 5 einen Schnitt entlang der Linie A-A durch das Halteteils mit Darstellung des eingeschobenen Raststück gemäß Fig. 4,

Fig. 6a und 6b Varianten der Ausbildung der Keilflächen im Einsteckschlitz und Raststück sowie

Fig. 7 eine schematische Ansicht des Verlaufs der Flächenpressung an einem durch mehrere erfindungsgemäße Klemmverbindungen verbundenen Flanschabschnitt.

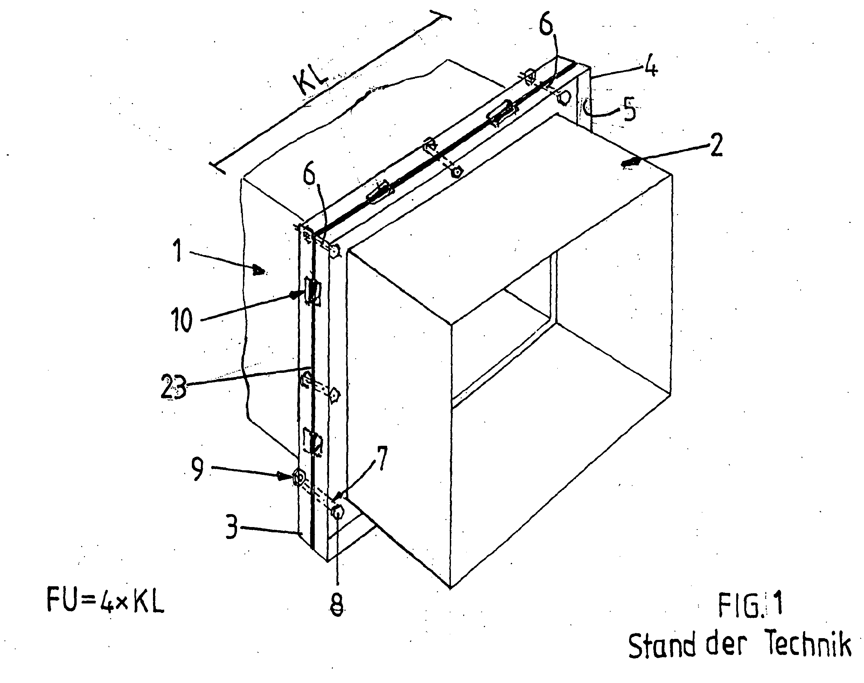

Die Fig. 1 zeigt zwei durch Schraub- und Klemmverbindungen zusammengefügte großformatige quadratische Luftkanalabschnitte 1 und 2 nach dem Stand der Technik gemäß DE 10 2005 047 726 A1, von dem ausgegangen wird. Jeder dieser bekannten Luftkanalabschnitte 1 und 2 hat eine Länge von 5 m, eine Höhe von 2 m und besitzt endseitige Flansche 3 und 4, die jeweils ein von der Wandung aufragendes L-förmiges Profil 5 bilden. Vorzugsweise an den vier Ecken eines jeden Flansches 3 und 4 sowie entlang des Flanschumfanges FU sind in regelmäßigen Abständen von 15 cm Bohrlöcher 6 eingebracht, die zur Aufnahme von aus Schraubenbolzen 7 und Mutter 8 bestehenden Schraubverbindungen 9 und weiteren Klemmverbindungen 10 vorgesehen sind.

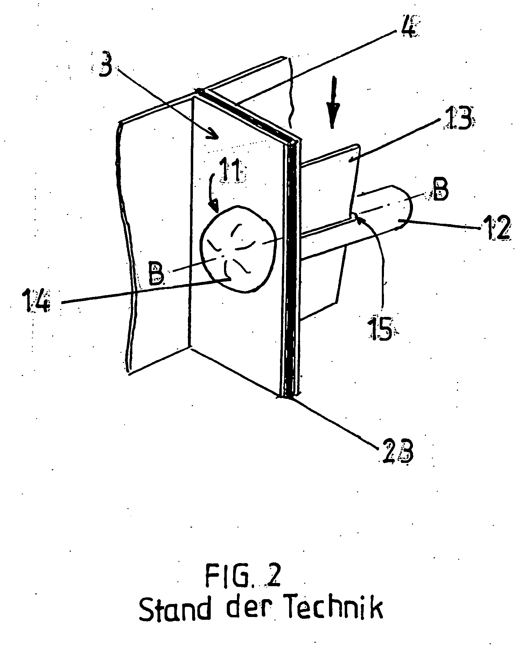

In die restlichen freien Bohrlöcher 6 werden Klemmverbindungen 10 eingesetzt, die nach dem Stand der Technik gemäß Fig. 2 aus einem bolzenartigen Halteteil 11 mit Schaft 12 und einem Raststück 13 bestehen. Das Halteteil 11 besitzt einen Kopf 14, der am Flansch 3 oder 4 auflagert. In den Schaft 12 ist ein längs der Schaftachse B-B sich erstreckender Einsteckschlitz 15 eingearbeitet, so dass das keilförmige, gegen den jeweilig anderen Flansch 4 oder 3 drückende Raststück 13 einschiebbar ist.
Es hat sich gezeigt, dass diese Klemmverbindungen gegen langandauernde Vibrationen, wie sie insbesondere bei Luftkanalabschnitte infolge der ständig sich ändernden Druckverhältnisse auftreten, durch Herausfallen des Raststücks 13 versagen und zur Zerstörung der Abdichtschicht zwischen den Flanschen 3 und 4 führen.

Die Schraubenbolzen 7 werden in die Bohrlöcher 6 an den Ecken und in die Bohrlöcher 6 eingesetzt, die etwa in der Mitte der Kantenlänge KL eines Flansches 3 und 4 angeordnet sind. Die Muttern 8 werden auf die Schraubenbolzen 7 aufgeschraubt und soweit angezogen, bis eine gleichmäßige Flächenpressung an den Stoßflächen der Flansche und eine ausreichende Abdichtung zwischen den Flanschen erreicht ist.

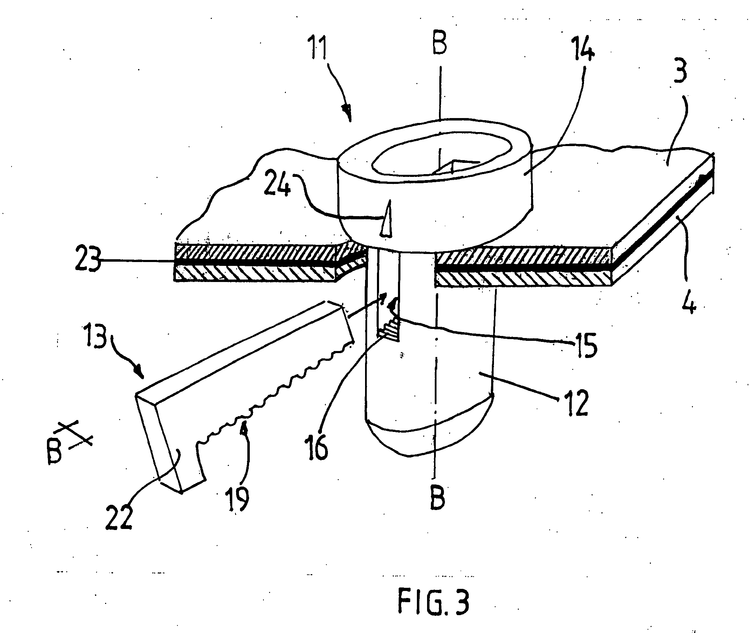

Die Fig. 3 zeigt die erfindungsgemäße Klemmverbindung in Explosionsdarstellung. Die Bezugszeichen für die Bauteile aus der Fig. 1 und 2 werden beibehalten. Die erfindungsgemäße Klemmverbindung besteht aus dem Halteteil 11 und dem keilförmigen Raststück 13. Das Halteteil 11 kann aus Stahl, Polyamid (PA6 nach DIN), Polycarbonat, Polyacetal, Composite-Werkstoffen wie Kohlenstofffasern oder Glasfasern bestehen. Es hat einen langgestreckten runden oder ovalartigen Schaft 12, in dem der Einsteckschlitz 15 in Längsrichtung der Schaftachse B-B angeordnet ist. Der Kopf 14 des Halteteils 11 lagert nach dem Einführen des Schaftes in das Bohrloch 6 auf dem Flansch 3 des ersten Luftkanalabschnitts 1 auf, erstreckt sich durch die Abdichtschicht 23 und durch das Bohrloch 6 des Flansches 4 des Luftkanalabschnitts 2 hindurch, so dass nach vollständigem Einschieben des Raststücks 13 in den Einsteckschlitz 15 das Raststück 13 mit seiner planen Oberfläche gegen den Flansch 4 drückt. Je nach Einschubtiefe in den Einsteckschlitz 15 kann der Pressdruck der Verbindung variiert werden.
Der Kopf 14 des Haltteils 11 ist mit einer Markierung 24 versehen, damit die Einführrichtung für das Raststück 13 nicht verwechselt werden kann.

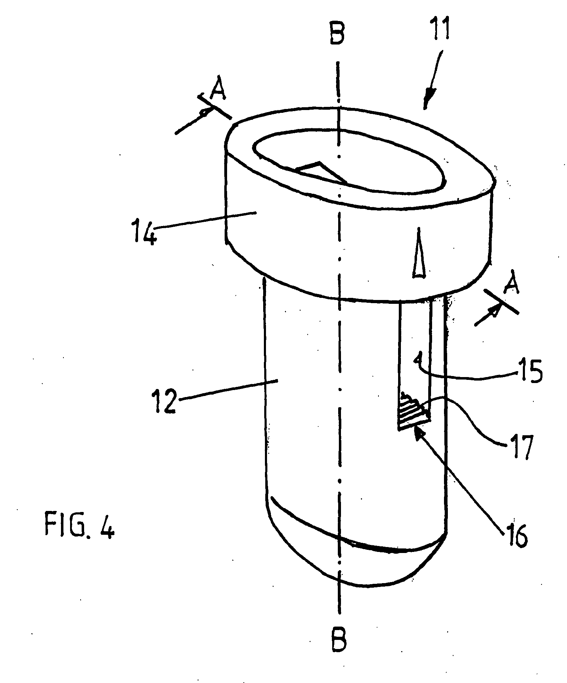

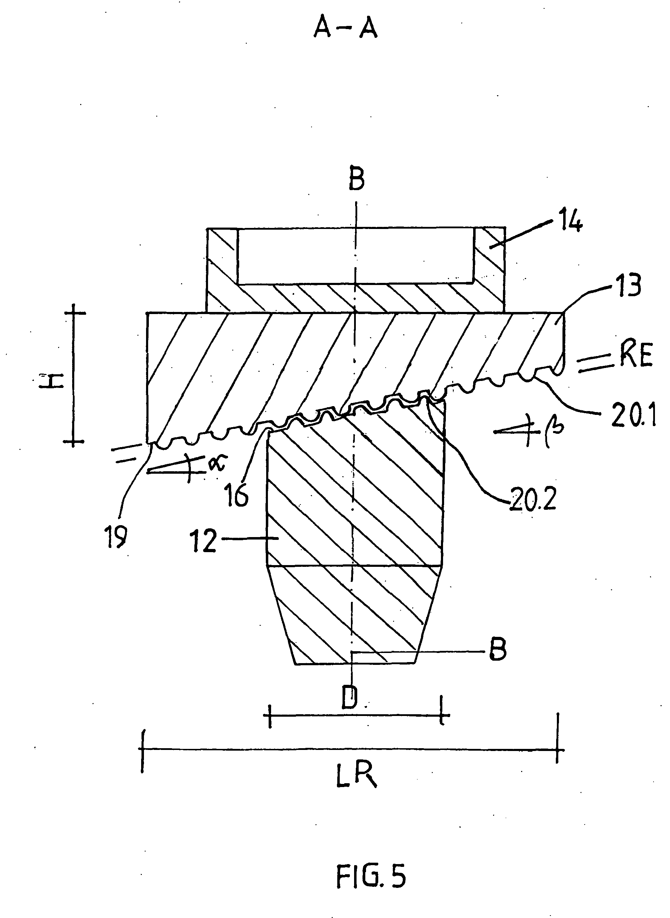

Wie aus den Fig. 4 und 5 ersichtlich ist, besitzt der Einsteckschlitz 15 auf seiner dem Kopf 14 abgewandten Seite eine Keilfläche 16, deren Öffnungswinkel α zwischen 5 und 12°, vorzugsweise 11°, liegt. Die Keilfläche 16 besitzt halbzylinderförmige Rastvorsprünge 17 oder eine an sich bekannte Verzahnung 17.1 bzw. 17.2 oder. Die Zahntiefe oder die Höhe der Rastvorsprünge 17 beträgt beispielsweise 0,5 mm. Im Falle der Verzahnung 17.1 bzw. 17.2 schließen die Zahnflanken der Zähne 18 einen Winkel δ von 90° ein.
Der Öffnungswinkel β der Keilfläche 19 des Raststückes 13 ist an den Öffnungswinkel α der Keilfläche 16 des Einsteckschlitzes 15 entsprechend angepasst und beträgt zwischen 5 und 12°, vorzugsweise 11°.

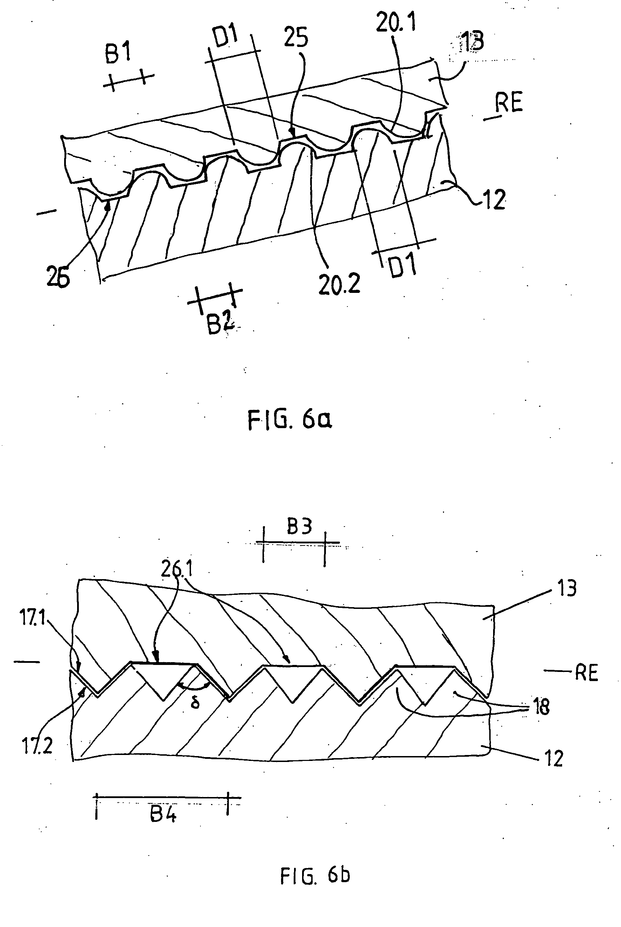

Die Fig. 6a und 6b stellen Varianten der Ausbildung der Keilflächen des Einsteckschlitzes 15 und der Raststückes 13 dar.
In die Keilfläche 19 des Raststückes 13 und in die Keilfläche 16 des Einsteckschlitzes 15 sind Rastvorsprünge 20.1 bzw. 20.2 geformt, die voneinander jeweils durch geradlinige in der Rastebene RE verlaufenden Bereiche 25 und 26 beabstandet sind. Die Bereiche 25 und 26 haben eine Breite B1 bzw. B2, die etwa dem Durchmesser D des Rastvorsprungs 20.1 bzw. 20.2 entspricht oder geringfügig größer ist, so dass sie einen Aufnahmeraum für die alternierend angeordneten Rastvorsprünge 20.1 bzw.20.2 bilden.
Beim Einschlagen des Raststücks 13 in den Einsteckschlitz 15 werden die zueinander alternierend vorspringenden Rastvorsprünge 20.1 und 20.2 in den Bereichen 25 und 26 aufgenommen und verrasten miteinander. Eine solche Verbindung lässt sich entsprechend lösen, wenn entgegen der Einschlagrichtung eine entsprechend bemessene Ausschlagkraft aufgebracht wird, die die Reibkraft zwischen den Rastvorsprüngen überwindet.
Die Länge LR des Raststückes 13 liegt deutlich über dem des Durchmesser D1 des Schaftes 12 und die Höhe H sowie die Breite B des Raststücks 13 ist so bemessen, dass es in den Einsteckschlitz 15 soweit einschlagbar ist, bis die Rastvorsprünge 20.1 und 20.2 gegeneinander unverrückbar sind. Die auf die Klemmverbindung wirksame Flächenpressung erreicht dann ihren Maximalwert. Die Klemmverbindung kann nur noch gelöst werden, wenn das Raststück 13 aus dem Einsteckschlitz 15 herausgeschlagen wird. Die Rastvorsprünge 20.1 und 20.2 gleiten aufeinander ab und die Verbindung löst sich. Die Reibkraft zwischen den Rastvorsprüngen 20.1 und 20.2 ist dabei so hoch bemessen, dass sich die Verbindung auch bei Vibrationen der Luftkanalabschnitte im Dauerbetrieb nicht löst.
Die Fig. 6b zeigt eine Variante, bei der die Keilfläche 16 des Einsteckschlitzes 15 mit einer an sich bekannten Verzahnung 17.1 versehen ist. Die Verzahnung 17.1 besteht aus aneinandergereihten Zähnen 18, deren Zahnflanken einen Winkel σ von 90° einschließen.
Die Keilfläche 19 des Raststücks 13 als anderer Rastpartner weist in diesem Beispiel ebenso eine Verzahnung 17.2 auf, die jedoch durch in der Rastebene RE geradlinig verlaufende Bereiche 26.1 voneinander beabstandet ist. Der Bereich 26.1 hat in seinem Fußbereich eine Breite B3, die der Zahnbreite B4 der Verzahnung 17.2 an der Keilfläche 19 und eine lichte Breite B5, die mindestens der Zahnbreite B4 zweier Zähne der Verzahnung 17.2 entspricht. Der Bereich 26.1 ist somit in der Lage zwei Zähne der Verzahnung 17.2 aufzunehmen. Die Zahnflanken 18 der Verzahnung 17.2 haben einen Winkel von 90°. Beim Einschlagen des Raststücks 13 in den Einsteckschlitz 15 miteinander verrasten die Verzahnungen 17.1 und 17.2 derart, dass jeweils immer zwei Zähne der Verrastung 17.2 innerhalb des Bereichs 26.1 aufgenommen werden. Auch diese Verbindung lässt sich entsprechend lösen, wenn entgegen der Einschlagrichtung eine entsprechend bemessene Ausschlagkraft aufgebracht wird, die die Reibkraft zwischen den Klemmpartnern überwindet.

Das Raststück 13 hat ein Einführende 21, um das Einschieben des Raststücks 13 in den Einsteckschlitz 15 zu erleichtern. Das dem Einführende 21 gegenüberliegende Ende 22 des Raststücks 13 ist ambossartigen ausgebildet, um beim Einschlagen eine Deformation des Raststückes 13 zu vermeiden.

Das Halteteil 11 und das Raststück 13 können aus Werkstoffen gleicher Qualität, aber auch aus unterschiedlichen Werkstoffen hergestellt sein. In dem hier vorliegenden Beispiel besteht das Halteteil 11 und Raststück aus Stahl. Natürlich gehört es auch zu der Erfindung, wenn das Haltestück 11 aus einem Polyamid gefertigt ist, das besonders zäh, abriebfest und schwingungsdämpfend ist. Das Raststück 13 besteht dagegen aus einem glasfaserverstärkten Epoxidharz oder einem entsprechend verstärkten Melaminharz. Durch diese Materialkombination kann sichergestellt werden, dass einerseits die Vibrationswirkung auf das Raststück 13 durch die Schwingungsdämpfung des Halteteils 11 so gering wie möglich gehalten und gleichzeitig das Raststück 13 durch seine hohe Festigkeit in der Lage ist, entsprechend hohe Presskräfte auf die zu verbindenden Flansche 3 und 4 zu übertragen.

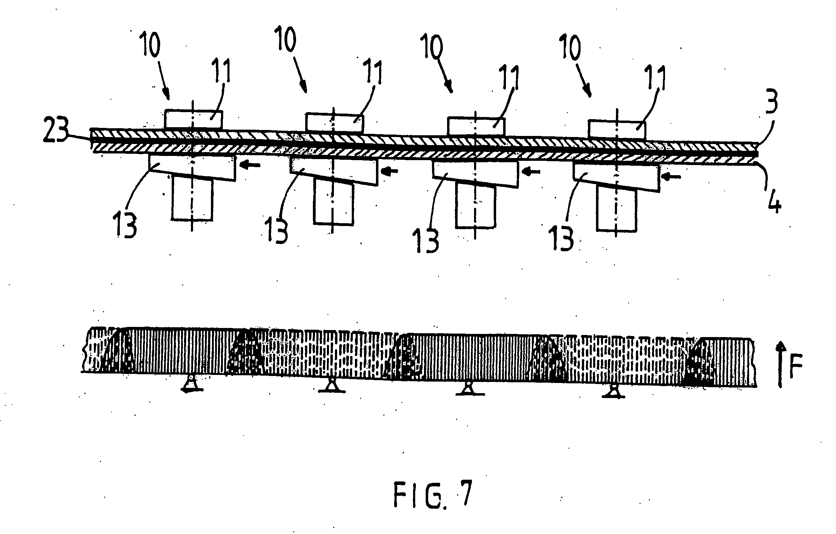

Die Fig. 7 zeigt wie die Flächenpressung F der Klemmverbindung über die Länge des wirksamen Raststückes 13 entlang des Flanschumfangs gleichmäßig aufrechterhalten wird. Das Verhältnis der Anzahl von Schraubverbindungen 9 zur Anzahl der Klemmverbindungen pro laufender m Flanschverbindung 10 beträgt dann mindestens 1:2 bis 1:10, wobei benachbarte Klemmverbindungen so aneinander angeordnet sind, dass sich ihre Wirkbereiche nahezu miteinander überlagern.
Die Halteteile 11 wirken wie Schwingungsdämpfer, die entlang des Flanschumfangs verteilt angeordnet sind. Eine Übertragung der Schwingungen auf die Raststücke 13 kann dadurch erheblich reduziert werden. Die Verzahnungen 17 und Rastvorsprünge 20 zwischen Einsteckschlitz und Raststück verhindern außerdem das Restschwingungen zu einem Lösen der Klemmverbindung führen.

Die Flansche 3 und 4 können zusätzlich durch eine hochviskose Schicht aus Reaktionskleber abgedichtet werden, der aus 4 Gewichtsanteilen Epoxidharz mit Thixotropiezusatz und 1 Gewichtsanteil Aminhärter bei Raumtemperatur zubereitet wurde. Der Reaktionskleber wird durch Aufspachteln, Streichen, Rollen oder Aufspritzen auf die Stoßflächen aufgetragen. Die mit Reaktionskleber versehenen Stoßflächen werden anschließend dann so aufeinandergesetzt, dass alle Bohrlöcher 6 in den Flanschen 3 und 4 zueinander fluchten. Durch Anziehen der Muttern 8 wird erreicht, dass der aufgebrachte Reaktionskleber gleichmäßig aus dem Spalt der aufeinanderliegenden Flansche 3 und 4 austritt und eine gleichmäßige Schichtdicke von annähernd 400 µm erreicht ist. Die Reaktionskleber-Basis ist aus einem reinen Epoxidharz- oder einem Gemisch aus Epoxidharz und Säureanhydride bzw. Epoxidharz und Aminhärter oder Cyanacrylate oder Methacryalte oder Polyester oder deren Gemische mit Styrol bzw. Methacrylate oder Formaldehyd-Harze zusammensetzt und die Abdichtschicht zwischen den Flanschen besteht aus einem Gemisch aus 50,0 Gew.-% bis 80,0 Gew.-% Epoxidharz und 20,0 Gew.-% bis 50,0 Gew.-% Aminhärter.

### Bezugszeichenliste

| | |
|---|---|
| Luftkanalabschnitte | 1, 2 |
| Flansche | 3, 4 |
| L-Profil | 5 |
| Bohrlöcher in 3, 4 | 6 |
| Schraubenbolzen | 7 |
| Mutter | 8 |
| Schraubverbindung | 9 |
| Klemmverbindung | 10 |
| Halteteil von 10 | 11 |
| Schaft von 11 | 12 |
| Raststück | 13 |
| Kopf von 11 | 14 |
| Einsteckschlitz in 12 | 15 |
| Keilfläche von 15 | 16 |
| Verzahnung von 16 | 17.1 |
| Verzahnung von 19 | 17.2 |
| Zähne von 17.1, 17.2 | 18 |
| Keilfläche von 13 | 19 |
| Rastvorsprünge von 19 | 20.1 |
| Rastvorsprünge von 16 | 20.2 |
| Einführende von 13 | 21 |
| Ambossartigen Ende von 13 | 22 |
| Abdichtschicht | 23 |
| Markierung | 24 |
| Geradliniger Bereich zwischen 20.1, 20.2 | 25, 26 |
| Geradliniger Bereich zwischen den Zähnen der Verzahnung 17.2 | 26.1 |
| Öffnungswinkel von 16 | α |
| Öffnungswinkel von 19 | β |
| Flankenwinkel der Zähne von 17.1 und 17.2 | δ |
| Breite von 13 | B |
| Breite von 25 | B1 |
| Breite von 26 | B2 |
| Breite von 26.1 am Fuß von 17.2 | B3 |
| Lichte Breite von 17.2 | B4 |
| Schaftachse | B-B |
| Durchmesser von 12 | D |
| Durchmesser von 20.1 und 20.2 | D1 |
| Flächenpressung | F |
| Flanschumfang | FU |
| Höhe von 13 | H |
| Kantenlänge des Flansches | KL |
| Länge des Raststücks 13 | LR |
| Radius von 20 | R |
| Rastebene | RE |

## Patentansprüche

1. Verbindungssystem, insbesondere Flanschverbinder für mit Abgasen, Dämpfen und/oder Kondensaten beaufschlagten Luftkanalmodule unterschiedlicher Querschnittsform aus dünnem Stahl-, Aluminium- oder Kupferblech oder Blech aus deren Legierungen oder aus Kunststoff geformten Abschnitten o. dgl., mit jeweils einen Flansch (3;4) aufweisenden ersten und zweiten Luftkanalabschnitten (1;2), mit die Flansche (3;4) zusammenhaltenden aus Schraubenbolzen (7) und Mutter (8) bestehenden Schraubverbindungen (9) sowie Klemmverbindungen (10) aus einem bolzenartige Halteteil (11) mit Schaft (12) und einem in einen Einsteckschlitz (15) des Schaftes (12) einsteckbaren keilförmigen, gegen den anderen Flansch drückenden Raststück (13), wobei die Schraub- und Klemmverbindungen durch in die Flansche (3;4) in regelmäßigen Abständen entlang des Umfangs eingebrachten Bohrlöcher (6) hindurchgeführt und die Flansche (3;4) im dichtenden Press-Sitz zusammengehalten sind, wobei der Einsteckschlitz (15) und das Raststück (13) einander zugewandte Keilflächen (16;19) aufweisen, **dadurch gekennzeichnet, dass** die Keilflächen (16; 19) des Raststückes (13) und Einsteckschlitzes (15) mit halbzylinderförmig ausgebildeten Rastvorsprüngen (20.1;20.2) versehen sind, die gegeneinander alternierend am Raststück (13) und am Einsteckschlitz (15) ausgerichtet sind und beim Einschieben in den Einsteckschlitz (15) aneinander lösbar verrasten, wobei die Rastvorsprünge (20.1;20.2) voneinander jeweils in einer Rastebene (RE) liegenden, geradlinig angeordneten Bereichen (25;26) zwischen den Rastvorsprüngen (20.1;20.2) beabstandet sind, in denen die
jeweils alternierende Rastvorsprünge (20.1;20.2) des Raststückes (13) bzw. Einsteckschlitz (15) aufgenommen sind, wobei die Bereiche (25;26) Breiten (B1; B2) aufweisen, die gegenüber dem Durchmesser (D1) der Rastvorsprünge (20.1;20.2) mindestens gleich oder geringfügig größer sind.

2. Verbindungssystem, insbesondere Flanschverbinder für mit Abgasen, Dämpfen und/oder Kondensaten beaufschlagten Luftkanalmodule unterschiedlicher Querschnittsform aus dünnem Stahl-, Aluminium- oder Kupferblech oder Blech aus deren Legierungen oder aus Kunststoff geformten Abschnitten o. dgl., mit jeweils einen Flansch (3;4) aufweisenden ersten und zweiten Luftkanalabschnitten (1;2), mit die Flansche (3;4) zusammenhaltenden aus Schraubenbolzen (7) und Mutter (8) bestehenden Schraubverbindungen (9) sowie Klemmverbindungen (10) aus einem bolzenartigen Halteteil (11) mit Schaft (12) und einem in einen Einsteckschlitz (15) des Schaftes (12) einsteckbaren keilförmigen, gegen den anderen Flansch drückenden Raststück (13), wobei durch die Schraub- und Klemmverbindung die Flansche (3;4) im dichtenden Press-Sitz zusammengehalten sind, wobei der Einsteckschlitz (15) und das Raststück (13) einander zugewandte Keilflächen (16;18) mit einer Verzahnung (17.1;17.2) aufweisen, **dadurch gekennzeichnet, dass** die Zähne der Verzahnung (17.1) des Raststückes (13) jeweils von einem in einer Rastebene (RE) liegenden, geradlinig angeordneten Bereich (26.1) beabstandet sind, dem mindestens zwei Zähne der Verzahnung (17.2) des Einsteckschlitzes (15) zugeordnet sind und die beim Einschieben in den Einsteckschlitz (15) lösbar an den Zähnen (17.1) der Verzahnung (17) verrasten, wobei der Bereich (26.1) am Fuß eine Breite (B3) aufweist, die gegenüber der Breite (B2) des Zahnes der Verzahnung (17.2) des Einsteckschlitzes (15) mindestens gleich oder geringfügig größer ist, wobei die lichte Breite (B4) des Bereichs (26.1) der doppelten Breite (B2) zweier Zähne der Verzahnung (17.2) entspricht.

3. Verbindungssystem nach Anspruch 1 oder 2, **dadurch gekennzeichnet, dass** das Raststück (13) und das Halteteil (11) aus einer gemeinsamen Werkstoffqualtät wie Stahl, Aluminium, Kunststoff, Kohlenstofffaser- oder Kunststoff-Composite bestehen.

4. Verbindungsssystem nach Anspruch 3, **dadurch gekennzeichnet, dass** der Kunststoff für Raststück (13) und das Halteteil (11) aus Polyamin oder Polycarbonat oder Polyacetal besteht.

5. Verbindungssystem nach Anspruch 3, **dadurch gekennzeichnet, dass** die Kunststoff-Composite für das Raststück (13) und das Halteteil (11) aus einem Gemisch aus Polycarbonat, Polyacetal und Polyamin mit 10% Glasfasern bestehen.

6. Verbindungssystem nach Anspruch 3, **dadurch gekennzeichnet, dass** die Kunststoff-Composite aus einem Gemisch aus Polyamin und 35 bis 50 Gew.-% Glasfasern bestehen

7. Verbindungssystem nach Anspruch 1 oder 2, **dadurch gekennzeichnet, dass** das Halteteil (11) und das Raststück (13) aus unterschiedlichen Werkstoffen bestehen, wobei das Halteteil (11) ein schwingungsdämpfendes Polyamid zur Absorption von Vibrationen und das Raststück (13) ein hochfestes Composite-Material aus Glashartgewebe-Laminat auf Epoxidharz- oder Melamin-Basis zur Übertragung hoher Presskräfte auf die Flansche umfasst.

8. Verbindungssystem nach Anspruch 1 oder 2, **dadurch gekennzeichnet, dass** das Verhältnis der Anzahl von Schraubverbindungen (9) zur Anzahl der Klemmverbindungen (10) pro laufendem m Flanschumfang mindestens 1:2 bis 1:10 beträgt, wobei benachbarte Klemmverbindungen (10) so aneinander angeordnet sind, dass der Pressdruck entlang des Flanschumfangs nahezu gleichmäßig ist

9. Verbindungssystem nach Anspruch 1 oder 2, **dadurch gekennzeichnet, dass** die Keilfläche (16) des Einsteckschlitzes (15) einen Öffnungswinkel (α) von 4° bis 12° vorzugsweise 11°, aufweist.

10. Verbindungssystem nach Anspruch 1 oder 2 **dadurch gekennzeichnet, dass** die Keilfläche (19) des Raststücks (13) einen Öffnungswinkel (β) von 4° bis 12°, vorzugsweise 11°, aufweist.

11. Verbindungssystem nach Anspruch 1 bis 3, **dadurch gekennzeichnet, dass** die Verzahnungen (17) oder Rastvorsprünge (20.2) im Einsteckschlitz (15) eine Zahntiefe oder Höhe von 0,5 mm aufweisen.

12. Verbindungssystem nach Anspruch 11 **dadurch gekennzeichnet, dass** der Flankenwinkel (δ) der Zähne der Verzahnung (17.1;17.2) 90° beträgt.

13. Verbindungssystem nach Anspruch 1 oder 2, **dadurch gekennzeichnet, dass** der Schaft (12) des Halteteils (11) eine elliptische, ovalartige langgestreckte oder kreisrunde Form besitzt.

14. Verbindungssystem nach Anspruch 1 oder 2, **dadurch gekennzeichnet, dass** der Kopf (14) des Halteteils (11) eine kreisrunde oder ovale Form aufweist, die mit einer Markierung (24) versehen ist, die die Einschlagrichtung für das Raststück (13) kennzeichnet.

15. Verbindungssystem nach Anspruch 1 oder 2, **dadurch gekennzeichnet, dass** das Raststück (13) eine Länge (LR) aufweist, die deutlich größer als die Längsabmessung (LS) des Schaftes (12) des Haltteils (11) ist.

16. Verbindungssystem nach Anspruch 1 oder 2, **dadurch gekennzeichnet, dass** das Raststück (13) in seiner Höhe (H) und Dicke an die Höhe und Breite des Einsteckschlitzes (15) angepasst ist.

17. Verbindungssystem nach Anspruch 1 oder 2, **dadurch gekennzeichnet, dass** das Raststück (13) an seinem den Einsteckschlitz (15) zugewandten Ende (21) beidseitig angefast ist.

18. Verbindungssystem nach Anspruch 1 oder 2 **dadurch gekennzeichnet, dass** das Raststück (15) an seinem dem Einsteckschlitz (15) abgewandten Ende (22) einen ambossartigen Bereich zum Einschlagen in die Schlitzöffnung aufweist.

## Claims

1. Connection system, especially flange joints of admitted to waste gas, vapors and/or condensation products air duct modules with different cross-sectional shapes made of thin sheets of steel, aluminum or copper or of sheets made of their alloys or of portions formed out of synthetic material or the like, with a first and a second air duct portion (1; 2) each having a flange (3; 4), with screwed connections (9) consisting of screw bolts (7) and nuts (8) holding the flanges together as well as with clamped joints (10) consisting of a bolt-like holding part (11) with a shank (12) and a wedge-shaped locking piece (13) insertable into a snap-in hole (15) of the shank (12), which presses against the other flange, wherein the screwed connections and clamped joints are set into holes (6) placed in regular distances around the circumference of the flanges (3; 4) holding them together by a sealing compression joint, wherein the snap-in hole (15) and the locking piece (13) have wedge-shaped surfaces (16; 19) facing each other, **characterized in that** the wedge-shaped surfaces (16; 19) of the locking piece (13) and the snap-in opening (15) are provided with semi-cylindrical locking projections (20.1; 20.2) which are aligned alternating to each other at the locking piece (13) and at the snap-in opening (15) and detachably interlock with each other, when the locking piece (13) is pushed into the snap-in opening (15), wherein the distance between the locking projections (20.1; 20.2) on one locking level (RE) in each case is defined by linear areas (25; 26) between the locking projections (20.1; 20.2), in which are accommodated the respectively alternating locking projections (20.1; 20.2) of the locking piece (13) or the snap-in opening (15), wherein these areas (25; 26) have a breadth (B1; B2) which has at least the size of the diameter (D1) or is slightly bigger than the diameter of the locking projections (20.1; 20.2).

2. Connection system, especially flange joints of admitted to waste gas, vapors and/or condensation products air duct modules with different cross-sectional shapes made of thin sheets of steel, aluminum or copper or of sheets made of their alloys or of portions formed out of synthetic material or the like, with a first and a second air duct portion (1; 2) each having a flange (3; 4), with screwed connections (9) consisting of screw bolts (7) and nuts (8) holding the flanges together as well as with clamped joints (10) consisting of a bolt-like holding part (11) with a shank (12) and a wedge-shaped locking piece (13) insertable into a snap-in hole (15) of the shank (12), which presses against the other flange, wherein the screwed connections and clamped joints are set into holes (6) placed in regular distances around the circumference of the flanges (3; 4) holding them together by a sealing compression joint, wherein the snap-in hole (15) and the locking piece (13) have wedge-shaped surfaces (16; 19)with teeth (17.1; 17.2) facing each other, **characterized in that** between the teeth (17.1; 17.2) of the toothed locking piece (13) in each case exists a linear area (26.1) on the same locking level (RE) to which are allocated at least two teeth (17.2) of the toothed snap-in opening (15) and which, when pushed into the snap-in opening (15) detachably interlock with the teeth (17.1) of the teeth (17), wherein the area (26.1) at its root has a breadth (B3) which with regard to the width (B2) of a tooth of teeth (17.2) of the insertion opening (15) has at least the same size or is slightly bigger, wherein the clear width (B4) of the area (26.1) corresponds with the double width (B2) of two teeth (17.2).

3. Connection system according to claims 1 or 2, **characterized in that** the locking piece (13) and the holding part (11) are made of materials of the same quality as steel, aluminum, synthetic material, carbon fiber composite or synthetic material composite.

4. Connection system according to claim 3, **characterized in that** the synthetic material for the locking piece (13) and the holding part (11) consists of polyamine or polycarbonate or polyacetal.

5. Connection system according to claim 3, **characterized in that** synthetic material composites for the locking piece (13) and the holding part (11) consist of a mixture of polycarbonate, polyacetal and polyamine with 10 % glass fibers.

6. Connection system according to claim 3, **characterized in that** the synthetic material composites consist of a mixture of polyamine and 35 to 50 weight-% glass fibers.

7. Connection system according to claims 1 or 2, **characterized in that** the holding part (11) and the locking piece (13) consist of different materials, wherein the holding part (11) comprises a vibration reducing polyamide to absorb vibrations and the locking piece (13) comprises a high-tensile composite material of glass reinforced laminate on the basis of epoxy resin or melamine to transmit high pressure forces onto the flanges.

8. Connection system according to claims 1 or 2, **characterized in that** the ratio between the quantity of screwed connections (9) to the quantity of clamping joints (10) per running meter flange circumference amounts to at least 1 : 2 to 1 : 10, wherein neighboring clamping joints (10) are arranged in such a way that the pressing power is almost the same alongside the circumference of the flange.

9. Connection system according to claims 1 or 2, **characterized in that** the wedge-shaped surface (16) of the snap-in opening (15) includes an angle (α) of 4° to 12°, preferably 11°.

10. Connection system according to claims 1 or 2, **characterized in that** the wedge-shaped surface (19) of the locking piece (13) includes an angle (β) of 4° to 12°, preferably 11°.

11. Connection system according to claims 1 to 3, **characterized in that** the teeth (17) or locking projections (20.2) in the insertion aperture (15) have a tooth depth or height of 0.5 mm.

12. Connection system according to claim 11, **characterized in that** the flank angle (δ) of the teeth (17.1; 17.2) is 90°.

13. Connection system according to claims 1 or 2, **characterized in that** the shank (12) of the holding part (11) has an elliptic, oval-like long stretched-out or circular round shape.

14. Connection system according to claims 1 or 2, **characterized in that** the head (14) of the holding part (11) has a circular round or oval shape provided with a marking (24), that shows the knock in direction for the locking piece (13).

15. Connection system according to claims 1 or 2, **characterized in that** the locking piece (13) has a length (LR) which is significantly longer than the length (LS) of the shank (12) of the holding part (11).

16. Connection system according to claims 1 or 2, **characterized in that** the locking piece (13) according to its height (H) and its thickness is adjusted to the height and the breadth of the insertion aperture (15).

17. Connection system according to claims 1 or 2, **characterized in that** the locking piece (13) is beveled on both sides at its end (21) facing the insertion aperture (15).

18. Connection system according to claims 1 or 2, **characterized in that** the locking piece (13) at its end (22) opposite to the insertion aperture (15) has an anvil-like portion for knocking it into the aperture.

## Revendications

1. Système de raccordement, notamment raccord à brides pour modules de canal d'aération soumis à l'action de gaz d'échappement, vapeurs et/ou condensats présentant des section transversales de différentes formes et formés d'une tôle mince en acier, en aluminium ou en cuivre ou d'une tôle mince en alliages de ces éléments ou de sections moulées en matière plastique ou similaires, comprenant une première et une seconde sections de canal d'aération (1 ; 2) pourvues à chaque fois d'une bride (3 ; 4), comprenant des assemblages par vis (9) formés d'un boulon fileté (7) et d'un écrou (8) qui maintiennent les brides (3 ; 4) ainsi que des assemblages par serrage (10) formés d'un élément de maintien (11) similaire à un boulon muni d'une tige (12) et d'une pièce d'enclenchement (13) en forme de coin pouvant être emboîtée dans une fente d'emboîtement (15) de la tige (12) et pressant contre l'autre bride, les assemblages par vis et par serrage passant à travers des alésages (6) percés à intervalles réguliers dans la bride (3 ; 4) le long de la circonférence et les brides (3 ; 4) étant maintenues en ajustement serré étanche, la fente d'emboîtement (15) et la pièce d'enclenchement (13) étant pourvues de surfaces inclinées (16 ; 19) tournées l'une vers l'autre, **caractérisé en ce que** les surfaces inclinées (16; 19) de la pièce d'enclenchement (13) et de la fente d'emboîtement (15) sont pourvues de saillies d'enclenchement (20.1 ; 20.2) exécutées en forme de demi-cylindres qui sont alignées en vis-à-vis et en alternance sur la pièce d'enclenchement (13) et sur la fente d'emboîtement (15) et s'enclenchent les unes avec les autres de manière détachable lors de l'introduction dans la fente d'emboîtement (15), les saillies d'enclenchement (20.1 ; 20.2) étant à chaque fois séparées les unes des autres par des zones (25 ; 26) rectilignes situées entre les saillies d'enclenchement (20.1 ; 20.2) dans un plan d'enclenchement (RE), zones dans lesquelles les saillies d'enclenchement (20.1 ; 20.2) de la pièce d'enclenchement (13) resp. fente d'emboîtement (15) sont reçues à chaque fois en alternance, les zones (25 ; 26) ayant des largeurs (B1 ; B2) qui sont au moins égales ou à peine supérieures au diamètre (D1) des saillies d'enclenchement (20.1 ; 20.2).

2. Système de raccordement selon la revendication 1, notamment raccord à brides pour modules de canal d'aération soumis à l'action de gaz d'échappement, vapeurs et/ou condensats présentant des section transversales de différentes formes et formés d'une tôle mince en acier, en aluminium ou en cuivre ou d'une tôle mince en alliages de ces éléments ou de sections moulées en matière plastique ou similaires, comprenant une première et une seconde section de canal d'aération (1 ; 2) pourvues à chaque fois d'une bride (3 ; 4), comprenant des assemblages par vis (9) formés d'un boulon fileté (7) et d'un écrou (8) qui maintiennent les brides (3 ; 4) ainsi que des assemblages par serrage (10) formés d'un élément de maintien (11) similaire à un boulon muni d'une tige (12) et d'une pièce d'enclenchement (13) en forme de coin pouvant être emboîtée dans une fente d'emboîtement (15) de la tige (12) et pressant contre l'autre bride, les brides (3 ; 4) étant maintenues en ajustement serré étanche grâce à l'assemblage par vis et par serrage, la fente d'emboîtement (15) et la pièce d'enclenchement (13) étant pourvues de surfaces inclinées (16 ; 18) présentant une denture (17.1 ; 17.2) tournées l'une vers l'autre, **caractérisé en ce que** les dents de la denture (17.1) de la pièce d'enclenchement (13) sont séparées à chaque fois par une zone (26.1) rectiligne située dans un plan d'enclenchement (RE) à laquelle sont associées au moins deux dents de la denture (17.2) de la fente d'emboîtement (15) qui s'enclenchent de manière détachable avec les dents (17.1) de la denture (17) lors de l'introduction dans la fente d'emboîtement (15), la zone (26.1) ayant, à sa base, une largeur (B3) qui est au moins égale ou légèrement supérieure à la largeur (B2) de la dent de la denture (17.2) de la fente d'emboîtement (15), la largeur libre (B4) de la zone (26.1) correspondant au double de la largeur (B2) de deux dents de la denture (17.2).

3. Système de raccordement selon la revendication 1 ou 2, **caractérisé en ce que** la pièce d'enclenchement (13) et l'élément de maintien (11) sont formés d'un matériau de qualité identique tel que l'acier, l'aluminium, une matière plastique, un matériau composite en fibres de carbone ou une matière plastique composite.

4. Système de raccordement selon la revendication 3, **caractérisé en ce que** la matière plastique pour la pièce d'enclenchement (13) et l'élément de maintien (11) est en polyamine ou en polycarbonate ou en polyacétal.

5. Système de raccordement selon la revendication 3, **caractérisé en ce que** la matière plastique composite pour la pièce d'enclenchement (13) et l'élément de maintien (11) est faite d'un mélange de polycarbonate, polyacétal et polyamine contenant 10 % de fibres de verre.

6. Système de raccordement selon la revendication 3, **caractérisé en ce que** la matière plastique composite est faite d'un mélange de polyamine et de 35 % en poids à 50 % en poids de fibres de verre.

7. Système de raccordement selon la revendication 1 ou 2, **caractérisé en ce que** l'élément de maintien (11) et la pièce d'enclenchement (13) sont formés de matériaux différents, l'élément de maintien (11) comprenant une polyamide amortissant les vibrations permettant d'absorber des vibrations et la pièce d'enclenchement (13) comprenant un matériau composite hautement résistant constitué d'un tissu stratifié à base de résine époxy ou de mélamine renforcé de fibres de verre permettant de transmettre des forces de pression élevées aux brides.

8. Système de raccordement selon la revendication 1 ou 2, **caractérisé en ce que** le rapport du nombre d'assemblages par vis (9) au nombre d'assemblages par serrage (10) par mètre courant de circonférence de bride est au moins compris entre 1 :2 et 1 :10, des assemblages par serrage (10) voisins se côtoyant de telle sorte que la force de pression le long de la circonférence des brides soit pratiquement uniforme.

9. Système de raccordement selon la revendication 1 ou 2, **caractérisé en ce que** la surface inclinée (16) de la fente d'emboîtement (15) a un angle d'ouverture (α) de 4° à 12°, de préférence 11°.

10. Système de raccordement selon la revendication 1 ou 2, **caractérisé en ce que** la surface inclinée (19) de la pièce d'enclenchement (13) a un angle d'ouverture (β) de 4° à 12°, de préférence 11°.

11. Système de raccordement selon les revendications 1 à 3, **caractérisé en ce que** les dentures (17) ou saillies d'enclenchement (20.2) dans la fente d'emboîtement (15) ont une profondeur de dent ou hauteur de 0,5 mm.

12. Système de raccordement selon la revendication 11, **caractérisé en ce que** l'angle de flanc (δ) des dents de la denture (17.1 ; 17.2) est de 90°.

13. Système de raccordement selon la revendication 1 ou 2, **caractérisé en ce que** la tige (12) de l'élément de maintien (11) a une forme elliptique, allongée en ovale ou circulaire.

14. Système de raccordement selon la revendication 1 ou 2, **caractérisé en ce que** la tête (14) de l'élément de maintien (11) a une forme circulaire ou ovale qui est pourvue d'un marquage (24) qui indique la direction d'enfoncement pour la pièce d'enclenchement (13).

15. Système de raccordement selon la revendication 1 ou 2, **caractérisé en ce que** la pièce d'enclenchement (13) a une longueur (LR) qui est nettement supérieure à la dimension longitudinale (LS) de la tige (12) de l'élément de maintien (11).

16. Système de raccordement selon la revendication 1 ou 2, **caractérisé en ce que** la pièce d'enclenchement (13) a une hauteur (H) et une épaisseur adaptées à la hauteur et à la largeur de la fente d'emboîtement (15).

17. Système de raccordement selon la revendication 1 ou 2, **caractérisé en ce que** la pièce d'enclenchement (13) est chanfreinée sur les deux côtés au niveau de son extrémité (21) tournée vers la fente d'emboîtement (15).

18. Système de raccordement selon la revendication 1 ou 2, **caractérisé en ce que** la pièce d'enclenchement (15) est pourvue, au niveau de son extrémité (22) éloignée de la fente d'emboîtement (15), d'une zone similaire à une enclume pour l'enfoncement dans l'ouverture de la fente.
